Europäisches Patentamt

European Patent Office

Office européen des brevets

(19)

(11) Publication number: 0 396 491
A2

(12) EUROPEAN PATENT APPLICATION

(21) Application number: 90610028.4

(22) Date of filing: 01.05.90

(51) Int. Cl.5: B27C 1/12

(30) Priority: 02.05.89 DK 2151/89

(43) Date of publication of application:
07.11.90 Bulletin 90/45

(84) Designated Contracting States:
AT BE CH DE DK ES FR GB GR IT LI LU NL SE

(71) Applicant: Thogersen, Poul
Bilsbaekvej 147
DK-8300 Odder(DK)

(72) Inventor: Thogersen, Poul
Bilsbaekvej 147
DK-8300 Odder(DK)

(74) Representative: Larsen, Hans Ole et al
Larsen & Birkeholm ApS Europaeisk
Patentbureau P.O. Box 200
DK-2630 Taastrup(DK)

(54) Method and feeding machine for the feeding of a machine tool.

(57) In order to be able to feed wooden staves (2) into, for example, a planing machine, from a pack or stack (1) of wood placed close to the feeding table (18) of the machine tool, and for this feeding to take place in step with the working capacity of the machine, according to the invention there is used a method by which a clamping aggregate (6) with clamping jaws (7) is lowered over the upper layer of the stack (1) and is clamped around said layer, after which the layer is raised and released from the clamping jaws (7), whereby it falls down on to a support (9) from which the adjacently-lying articles (2) are pushed down on to a chute (17) by means of the pushing device (10).

The distance between the stack (1) and the feeding table (18) is hereby reduced to the horizontal length of the chute (17), and since the articles (2) are exposed only to a sideways pushing effect, they will not turn on the support (9) or the chute (17). It is hereby ensured that the articles are always correctly oriented at the inlet to the machine tool, so that the waste of material or erroneous machining is avoided.

Fig. 3

EP 0 396 491 A2

The invention relates to a method for the feeding of a machine tool or the like with stave- or board -shaped articles, such as wooden articles, by feeding from a stack or pack, where the articles are uniformly oriented and arranged adjacently in layers, and also a feeding machine for the execution of the method.

In the feeding of woodworking machines, such as planing machines, it is of decisive importance that this can be effected at a speed which corresponds to the capacity of the planing machine, and that this can be carried out at the lowest possible costs.

Hitherto-known feeders of this kind have not been completely capable of fulfilling these demands, partly because their feeding capacity is not sufficient, the result being that optimum utilization of the woodworking machine is not achieved, and partly because these machines are very space-demanding. This is due to their construction, which in principle corresponds to that of a crane which can convey a stack of wood to a dropping position from which the articles are to be conducted to the woodworking machine. Moreover, these feeders require a considerable degree of manual handling and control, among other things for reasons of the possibility of the articles being turned during the transport, which can also give rise to a great waste of material in the machining.

It is the object of the invention to overcome these disadvantages and drawbacks, and this is achieved by a method whereby a layer of articles is lifted up from the stack and placed on a support over the stack, whereafter a carrier which lies up against the outer article pushes the articles out on a fixed chute which opens out at a feeding table, which leads forward to the machine tool.

There is hereby achieved a hitherto-unknown possibility of the articles being able to be transported from the stack or the pack and directly out onto an inclined chute which extends transversely to the feeding path of the woodworking machine, whereby the individual articles are prevented from turning during this transport. The distance from the stack or the pack to the feeding path can thus be limited to the horizontal length of the chute. This means that a minimum of space is utilized, which is an important advantage in that the costs of the plant can hereby be reduced.

Furthermore, the method affords security that the articles do not turn during the transport, the reason being that after being lifted they are placed directly on a support which is fixed, and upon which they are pushed sideways down the chute to the feeding table. The need for manual control of the feeding is hereby reduced.

Furthermore, the method makes it possible for this slideway to serve as a buffer store, whereby a new stack or pack can be fed in under the feeding machine without shutting down the woodworking machine.

This provides the possibility of a continuous production without any need whatsoever of further equipment.

As disclosed in claim 2, by using a feeding machine which is built up of two columns with take-off arms to the one side, the stack or pack can be positioned under these arms, and the articles can be transported up and in between the columns to the chute on the opposite side of the columns. This gives the least distance possible from the stack or the pack and to the feeding track.

As disclosed in claim 3, by providing the machine with a pair of sensors or pulse generators, which initiate the actual clamping and the lifting of an article layer, the lowering speed can be increased and is not reduced until just before the clamping is to begin, whereby the capacity of the machine becomes very great.

As disclosed in claim 4, by allowing the lowering movement of the two take-off arms to take place independently of each other, the speed can be further increased since the braking can be effected precisely when the clamping aggregate is in position.

As disclosed in claim 5, by having the one take-off arm suspended in a vertical axle, the clamping power can always be ensured, even when the pack or the stack is not precisely oriented in relation to the feeding machine.

Finally, as disclosed in claim 6, it is expedient to use flexible jaws, in that it is hereby ensured that the articles are secured even though their mutual lengths vary slightly.

The invention will now be described in more detail with reference to the drawing, where

fig. 1 shows a feeding machine seen from the side before the raising of an article layer,

fig. 2 shows the feeding machine lowered and the clamping initiated,

fig. 3 shows the feeding machine with raised article layer and during the feeding of the articles out to the chute,

fig. 4 shows the feeding machine seen from the end in the direction IV-IV in fig. 1,

fig. 5 shows the feeding machine seen in the direction V-V in fig. 2, and

fig. 6 shows the feeding machine seen in the direction VI-VI in fig. 3.

In the drawing is shown a preferred embodiment of the feeding machine according to the invention.

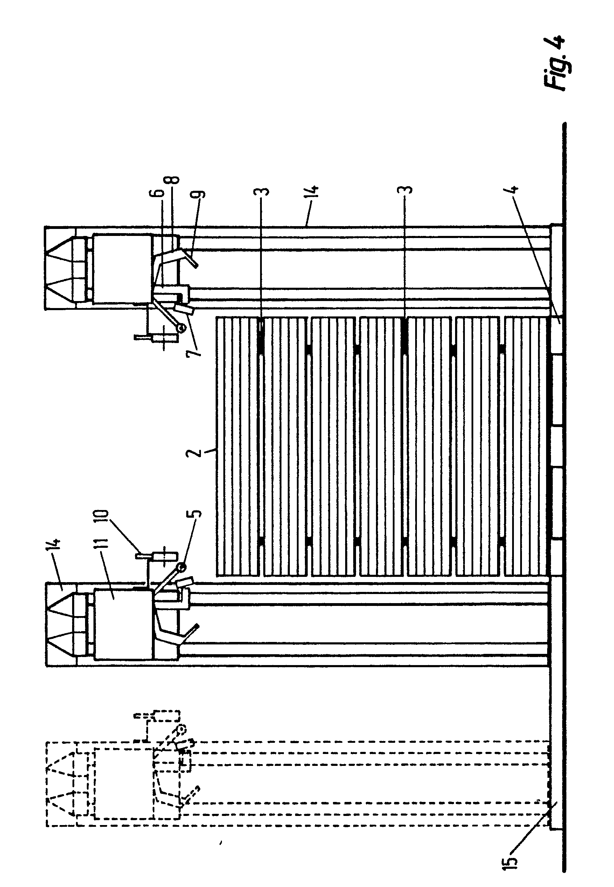

The machine comprises a support 15 mounted on the floor, said support bearing two columns 14. As indicated by the stippled lines in fig. 4, the position of the one column on the support can be adjusted.

It is hereby possible to set the machine according to the length of the articles 2.

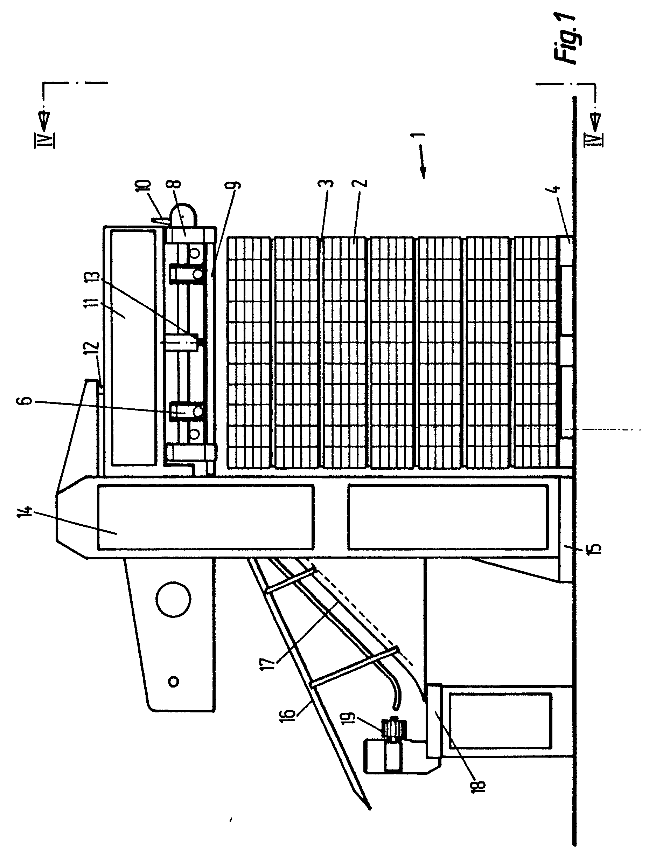

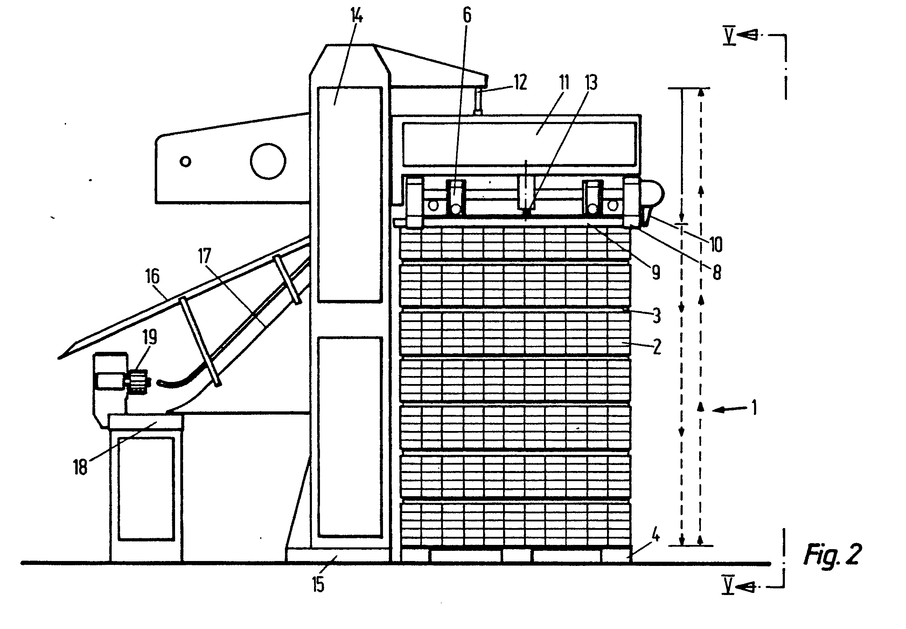

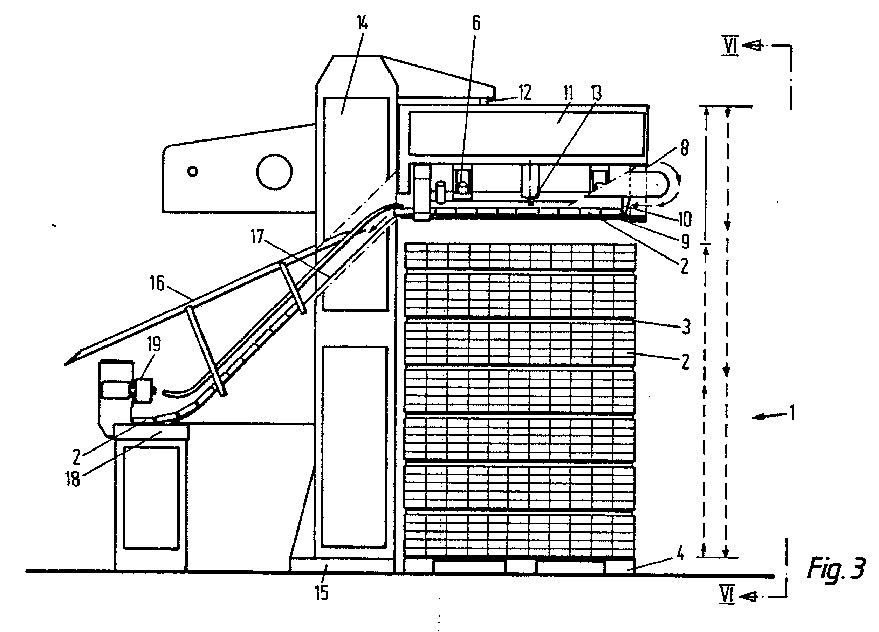

At the take-off side of the column 14, which is to the left in figs. 1-3, there is mounted an article chute 17 which opens out at the side of a transverse feeding table 18 or other transport device. For the feeding forward of the articles 2 on the feeding table 18 there is mounted a feed arrangement, such as a feed roller 19, the height of which can be adjusted to suit the thickness of the articles 2, as shown in fig. 3.

Over the article chute 17 there is mounted a further chute 16 on which the spacers 3 placed between the layers are separated and led away when the feeding commences.

On the other side of the column there is mounted a take-off arm 11 which, by means of commonly-known devices, can be raised and lowered sliding against the column 14. Furthermore, a counterweight is secured to the arm 11 via a chain 12 which extends over wheels in the top of the column. The arms 11 can thus be balanced in such a manner that they require only a small amount of power for their movement and braking.

The remaining handling and transport equipment is suspended on the undersides of the arms 11.

This equipment comprises a clamping arrangement consisting of clamping jaws 7 extending along the arm 11, mounted on a pair of arms 6 which can swing out wards and inwards, i.e. away from and towards each other.

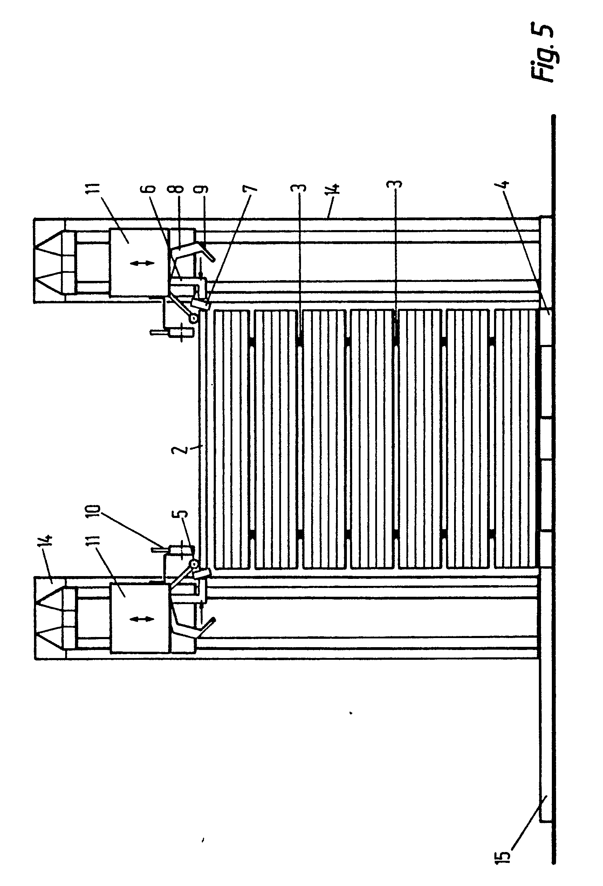

The clamping jaws 7 are preferably made of rubber or similar elastic material, so that they can adjust themselves in accordance with the end surfaces of the articles 2 when they are moved against said surfaces by the arms 6, as shown in fig. 5.

Additionally, a rail 9 is mounted on a pair of pivotable arms 8, so that the rails 9 can be swung in under the clamping jaws 7 when these secure an article layer.

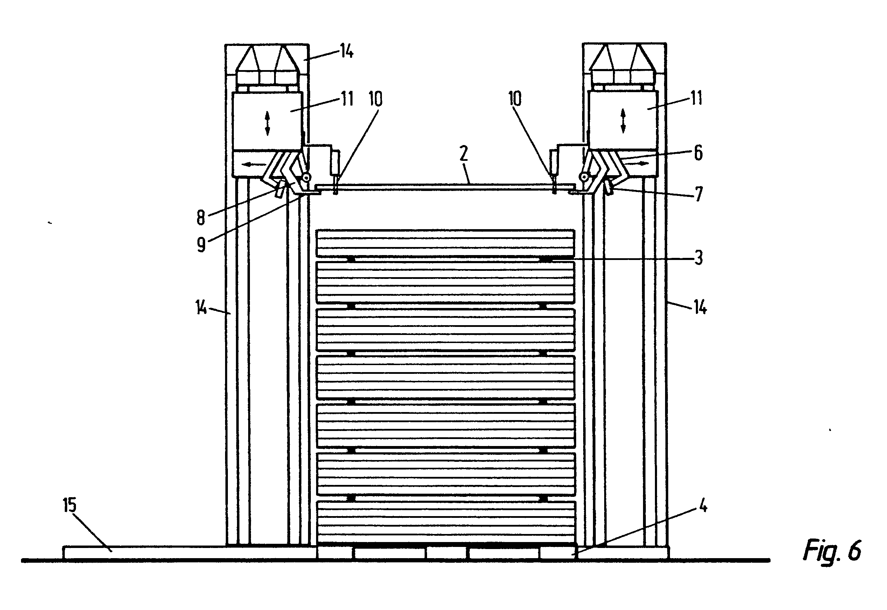

When swung into their inwards position, the rails 9 take up a horizontal position as shown in fig. 6, and thus the articles can rest on the rails during their further transport.

For the control of these movements there is mounted a sensor 5, for example in the form of a switch-arm with a roller, which provides a pulse when the roller abuts against the upper surface of the article, as shown in fig. 5.

Finally, on the inner side of the arms 11 there is mounted a pair of carrier chains which support a number of carrier fingers 10, so that the fingers 10 can push against the articles 2 when these are lying on the rails 9, as shown in figs. 3 and 6, whereby the articles are fed out onto the chute 17.

The method will now be described.

A stack or pack, shown in the drawing by the reference figure 1, consists of a pallet 4 on which boards or articles 2 are laid with spacing pins 3 between a suitable number of layers. All of the articles 2 are uniformly oriented with the spacing pins extending transversely. Such a pack 1 is placed under the arm 11 so that the articles extend between the arms.

The column 14 is now adjusted in accordance with the length of the articles, as shown in fig. 4.

When the machine is started, the arms 11 are in the upper position as shown in figs. 1 and 4. The clamping jaws 7 and the slide rails 9 are in their outermost position, while the carrier fingers 10 are in the upper position.

Hereafter, a programmable controlling of the feeding machine is initiated, and since this can be controlled by the woodworking machine, the feeding can be effected in a fully automatic manner.

The arms 11 are lowered at high speed independently of each other, until the sensors 5 touch the articles 2. The lowering speed is thereafter reduced, and when the arms have stopped, the clamping jaws 7 are moved inwards on the clamp arms 6 into abutment with the end surfaces of the articles 2, as shown in fig. 5. The one clamping jaw 7 can be adjusted by virtue of its suspension in the bearing 13, whereby the clamping jaws can be aligned in accordance with the articles. The jaws are now pressed inwards and the arms 11 are raised to the upper position.

During the course of the above, the slide rails 9 have moved in under the article layer, so that when the jaws release their grip, the articles fall down and rest on the rails 9, as shown in figs. 3 and 6.

The carrier fingers 10 are started and they begin to push the articles sideways out onto the chute 17, so that they can slide, or possibly be transported on a not-shown track, down to the feeding table 18, from where they are introduced individually into the woodworking machine by means of a feed mechanism 19 or the like.

By suitable control of this cycle, one is able to ensure that there are always articles on the feeding table 18. When more articles are required, the arms 11 are lowered and a new layer is lifted and led out to the chute. At some point, there will be lifted a layer with spacers 3 on the upper surface, and these spacers 3 will automatically slide out on an overlying chute 16 and away from the articles.

When the last layer has been lifted, a new pack can be fed forward either manually or by means of an automatic conveyor, while the empty pallet 4 can be moved for use in the stacking of the machined articles.

This method and machine makes it possible to obtain a feeding capacity of up to 70 articles or five layers per minute, which makes it possible to feed machine tools with this capacity.

## Claims

1. Method for the feeding of a machine tool or the like with stave- or board-shaped articles, such as wooden articles, by feeding from a stack or pack, where the articles are uniformly oriented and arranged adjacently in layers, **characterized** in that a layer of articles (2) is clamped together and lifted up from the stack (1) and placed on a support (9) above the stack (1), after which a carrier (10), which lies up against the outer article (2), pushes the articles (2) out onto a fixed chute (17) which opens out at a feeding table (18) which leads forward to the machine tool.

2. Feeding machine for the execution of the method according to claim 1, **characterized** in that it comprises a pair of columns (14) on which there is mounted a take-off arm (11) which can be raised and lowered, and to which there is mounted a clamping aggregate (6, 7), a slide aggregate (8, 9) and a horizontally movable pushing device (10), and also a chute (17) which slopes downwards to the feeding table (18).

3. Feeding machine according to claim 2, **characterized** in that on the take-off arm (11) there is also mounted a sensor (5) which provides a pulse upon abutment against the upper surface of the articles (2).

4. Feeding machine according to claims 2 and 3, **characterized** in that the take-off arms (11) are lowered independently of each other.

5. Feeding machine according to claims 2 - 4, **characterized** in that at least one of the take-off arms (11) is provided with a vertical axle (13) on which the clamping aggregate (6, 7) and the slide aggregate (8, 9) are suspended in a pivotable manner.

6. Feeding machine according to claims 2 - 5, **characterized** in that the clamping aggregate comprises a flexible clamping jaw (7) which exextends between a number of arms (6) which can force the clamping jaw (7) into and out of abutment with the end surfaces of the articles (2).

*Fig. 1*

EP 0 396 491 A2

Fig. 2

Fig. 3

Fig. 4

EP 0 396 491 A2

Fig. 5

EP 0 396 491 A2

*Fig. 6*

EP 0 396 491 A2